# EUROPEAN PATENT APPLICATION

(11) **EP 4 782 178 A1**
(43) Date of publication of application: **29.07.2026**
(21) Application number: 24867366.7
(22) Date of filing: 13.09.2024
(51) Int. Cl.: B29C 48/25, B29C 48/07

(54) **DEFORMATION CONTROL DEVICE FOR NON-POLYVINYL CHLORIDE WOOD-PLASTIC PLATE, PRODUCTION LINE, AND USE**

(30) Priority: 19.09.2023 CN 202311211395
(71) Applicant: Hangzhou Print Flooring Technology Co., Ltd., Hangzhou, Zhejiang 311200 (CN)
(72) Inventor: YANG, Guocui, Hangzhou, Zhejiang 311200 (CN); LEI, Zhongshan, Hangzhou, Zhejiang 311200 (CN); DENG, Mengde, Hangzhou, Zhejiang 311200 (CN); HUANG, Donghui, Hangzhou, Zhejiang 311200 (CN); AO, Fangbing, Hangzhou, Zhejiang 311200 (CN); HUANG, Feng, Hangzhou, Zhejiang 311200 (CN)
(74) Representative: Garavelli, Paolo
(86) International application number: PCT/CN2024/118740
(87) International publication number: WO 2025/060957

(57) **Abstract**

The present invention relates to the technical field of floor manufacturing, and in particular to a non-polyvinyl chloride (non-PVC) wood-plastic composite board deformation control device, a production line, and applications thereof. The deformation control device comprises a die fixedly connected to an extruder for outputting a semi-finished board, and a traction roller assembly formed by combining a plurality of traction rollers and configured to perform traction and shaping of the semi-finished board. The die is provided with an outlet for outputting the semi-finished board. An included angle is formed between the outlet and a horizontal plane, such that the traction direction of the semi-finished board along the outlet by the traction roller assembly does not coincide with the direction of gravity acting on the semi-finished board itself, and the included angle therebetween is less than 90°. By adjusting the angular relationship between the outlet of the die and the horizontal plane, the deformation control device effectively overcomes the shrinkage and warpage problems that occur during extrusion of non-PVC wood-plastic composite boards but do not arise in conventional boards made of polyvinyl chloride (PVC).

## Description

### Technical Field

The present invention relates to the technical field of floor manufacturing, and in particular to a deformation control device, a production line and an application for a non-polyvinyl chloride wood-plastic board.

### Background Art

In the field of board manufacturing, flooring having three-dimensional wood grain has become a popular choice. By using advanced technologies and materials, such flooring can create products that are visually and tactilely similar to natural wood. These three-dimensional wood grain floors exhibit better performance and durability, and can satisfy consumers' demand for high-quality, low-maintenance and low-cost products. In addition, the manufacturing process of such products can reduce reliance on natural resources, thereby protecting the environment and promoting sustainable development.

At present, flooring with three-dimensional wood grain typically uses a board containing polyvinyl chloride (PVC) as a base material, and the three-dimensional wood grain is formed on the base material by printing or stacking. Since polyvinyl chloride artificial boards possess characteristics such as wear resistance, water resistance and corrosion resistance, they have certain advantages in the production of flooring having three-dimensional wood grain.

For example, Chinese Patent No. CN112095967B discloses a multi-level synchronized embossed round-edge PVC panel, which comprises a panel body. The panel body sequentially comprises, from top to bottom, a UV paint layer, a PVC wear-resistant layer, a PVC decorative film layer, a PVC substrate board, and a PVC bottom material layer. The surface of the panel contains a synchronized embossed simulation three-dimensional texture. The periphery of the panel body is provided with arc edges and a locking structure, and panels can be mutually locked and spliced through the locking structure.

Chinese Patent Application Publication No. CN114953665A discloses a preparation process of a PVC floor and a product obtained thereby. The specific preparation steps include: sequentially laminating a PVC base plate layer, a PVC printing layer and a PVC pre-coated film, and performing one-time laminating treatment to obtain a finished PVC floor product.

However, the use of polyvinyl chloride artificial boards has certain defects that are difficult to overcome in terms of recycling and environmental protection. First, due to the structural characteristics of polyvinyl chloride, recycling and reuse are relatively difficult, resulting in resource waste. Second, polyvinyl chloride may release harmful substances during production, use and disposal, thereby posing potential risks to the environment and human health. Therefore, for environmental reasons, it is necessary to impose certain restrictions on the application of polyvinyl chloride in the flooring industry.

In order to overcome the defects of polyvinyl chloride artificial boards, researchers have begun to explore alternative materials. Among them, polyolefin materials are considered to be a potential alternative. As a typical representative of polyolefin materials, polypropylene is a non-polyvinyl chloride material having good physical properties and chemical stability. It can be used to prepare artificial boards and can simulate textures and tactile sensations similar to natural wood. In addition, polypropylene materials are recyclable and reusable, which helps reduce resource waste and environmental pollution.

For example, Chinese Patent Application Publication No. CN108659333A provides a non-polyvinyl chloride surface covering comprising: a bottom material layer; an intermediate layer located on the bottom material layer, wherein the intermediate layer comprises an intermediate material layer; and a transparent wear-resistant layer located on the intermediate layer, wherein the transparent wear-resistant layer comprises 40-94.95 wt% of a polyolefin, 5-50 wt% of a polyolefin elastomer or polyolefin plastomer, and 0.05-10 wt% of a processing aid.

For another example, Chinese Patent Application Publication No. CN111267448A discloses a NON-PVC substrate 3D printed floor, comprising a NON-PVC substrate layer. A balance layer and a solid wood layer are sequentially arranged on the NON-PVC substrate layer. A UV primer layer is provided on a surface of the solid wood layer, a white UV paint layer is provided on the UV primer layer, a printed pattern layer is provided on a surface of the white UV paint layer, and a concave-convex effect layer is provided on a surface of the printed pattern layer.

However, since polyolefin materials (for example, polypropylene) have relatively high thermal shrinkage, this means that polypropylene shrinks when the temperature changes during the manufacturing process. Such thermal shrinkage may cause the board to shrink unevenly during cooling, thereby resulting in warpage and ultimately causing unevenness and instability of the flooring. In addition, compared with polyvinyl chloride, polyolefin materials also have certain deficiencies in wear resistance. Therefore, in order to overcome these problems, it is necessary to improve the preparation method and production apparatus of boards using polyolefin materials as raw materials, thereby helping to improve the quality, stability and environmental friendliness of flooring having three-dimensional wood grain.

### Summary of the Invention

The present invention aims to overcome the defects in the prior art that non-polyvinyl chloride wood-plastic boards have a relatively high warpage rate during the forming process, resulting in unevenness and instability of the finally obtained flooring, and therefore provides a deformation control device, a production line and an application for a non-polyvinyl chloride wood-plastic board so as to overcome the above-mentioned deficiencies.

In order to achieve the above invention objectives, the present invention is implemented through the following technical solutions:
In a first aspect, the present invention first provides a deformation control device for a non-polyvinyl chloride wood-plastic board,
comprising a die fixedly connected with an extruder and configured to output a semi-finished board, and a traction roller assembly formed by combining a plurality of traction rollers and configured to traction and shape the semi-finished board; the die comprises an outlet configured to output the semi-finished board, an included angle being formed between the outlet and a horizontal plane, such that a direction in which the semi-finished board is tractioned by the traction roller assembly along the outlet does not coincide with a direction of gravity acting on the semi-finished board itself, and an included angle between the two directions is less than 90 degrees.

In the prior art, for a board substrate using polyvinyl chloride as a raw material (for example, an SPC substrate or an LVT substrate), in the preparation process polyvinyl chloride is generally used as a polymer substrate while stone powder is added thereto, and the desired board is finally obtained by extrusion. Since polyvinyl chloride is an amorphous polymer, its volume shrinkage rate before and after extrusion is relatively low, such that the conventional polyvinyl chloride substrate does not need to excessively consider warpage caused by volume shrinkage during preparation. Meanwhile, due to the relatively strong polarity of polyvinyl chloride, after being mixed and melted with stone powder, the obtained melt has a relatively high viscosity, and the semi-finished board obtained after the melt flows out of the die and cools has relatively high hardness, such that even under the action of external forces, its shape-retaining ability remains strong, and therefore it is unlikely to undergo warpage deformation under the action of external forces and internal stresses.

In view of the above reasons, currently for board substrates using polyvinyl chloride as a raw material, during extrusion the material enters the extruder, is melted and plasticized, and is then output through a horizontally arranged die to form a semi-finished board; thereafter, the semi-finished board is tractioned in a horizontal direction and then enters a cooling mechanism for cooling and shaping. However, with the continuous improvement of environmental protection requirements, upgrading and replacing polyvinyl chloride materials has become imminent. However, when the Applicant used conventional extrusion equipment to extrude novel polyolefin-based board materials, an unexpected technical problem was discovered, namely that the polyolefin semi-finished board prepared by using conventional extrusion equipment has a relatively large volume shrinkage rate and severe warpage deformation, such that it is difficult to be used for preparing non-polyvinyl chloride wood-plastic boards and non-polyvinyl chloride wood-plastic flooring.

In this regard, the Applicant conducted in-depth research on the above phenomenon and found that the reasons for the severe warpage deformation of non-polyvinyl chloride wood-plastic boards include at least the following: (1) due to more regular molecular chain segments of polyolefin materials, their crystallization performance is significantly higher than that of conventional polyvinyl chloride, thereby causing volume shrinkage during the crystallization process; (2) meanwhile, since the viscosity of the polyolefin melt extruded from the die is lower, it is more susceptible to deformation under the action of external forces (traction force and gravity); (3) due to the influence of traction force and gravity, the degree of crystallization at different positions of the polyolefin material becomes non-uniform, further aggravating the formation of warpage. In view of the above causes of warpage, the Applicant proposes that improvements may be made from several aspects including raw material formulation, preparation forming process and forming equipment.

Among them, the present application modifies the conventional polyvinyl chloride wood-plastic board forming equipment so as to adapt to the production of novel non-polyvinyl chloride wood-plastic boards, thereby solving or alleviating the problem of severe warpage deformation of non-polyvinyl chloride wood-plastic boards caused by equipment.

During routine experiments, the Applicant found that extrusion equipment has an important influence on the crystallization behavior of polyolefin-based non-polyvinyl chloride wood-plastic boards. On this basis, the Applicant unexpectedly discovered that when the raw material, after being melted and plasticized by the extruder, is extruded from the die, the melt is subjected to gravity, causing the middle portion of the semi-finished board to sag, and the semi-finished board is also subjected to a traction force in a horizontal direction during conveying. After the superposition of forces in two different directions, the crystallization behavior at the center and at the edges of the semi-finished board changes inconsistently, thereby resulting in differences in crystallinity and crystal size between the center and the edges of the semi-finished board, ultimately leading to warpage in the width direction thereof.

In response to this phenomenon, the present application creatively changes the included angle between the outlet of the die and the horizontal plane, thereby changing the included angle between the direction in which the semi-finished board is tractioned by the traction roller assembly along the outlet and the direction of gravity acting on the semi-finished board itself to be less than 90 degrees. Through the above arrangement, the resultant force between the traction force of the traction roller assembly and gravity in the thickness direction of the semi-finished board is weakened and distributed more uniformly in the width direction of the semi-finished board, thereby reducing warpage of the semi-finished board in the width direction.

In addition, through the above arrangement, the resultant force along the length direction of the semi-finished board is also enhanced, such that macromolecules or microcrystalline structures inside the semi-finished board are subjected to an obvious orientation effect along the length direction thereof, further accelerating the inducing effect of external force on the semi-finished board along the length direction, and ultimately increasing the crystallization rate and crystallinity of the semi-finished board, thereby preventing shrinkage and warpage caused by crystal form changes during subsequent cooling and storage processes.

Further, since macromolecules or microcrystalline structures inside the semi-finished board are oriented under induction by external forces, their crystal structures are uniformly oriented and arranged along the length direction of the semi-finished board, such that the mechanical strength, hardness and wear resistance of the semi-finished board can be greatly improved.

However, the included angle between the direction in which the semi-finished board is tractioned by the traction roller assembly along the outlet and the direction of gravity acting on the semi-finished board itself is not the smaller the better. For example, in the extreme case where the two directions coincide, since the resultant force along the length direction of the semi-finished board is greatly increased, non-uniformity in thickness of the semi-finished board may occur, specifically manifested as the generation of flow marks and wave marks.

Therefore, in summary, the present application changes the angular relationship between the outlet of the die and the horizontal plane, thereby changing the included angle between the direction in which the semi-finished board is tractioned by the traction roller assembly along the outlet and the direction of gravity acting on the semi-finished board itself, effectively overcoming the shrinkage and warpage problems that did not occur in conventional board substrates using polyvinyl chloride as a raw material during extrusion. Meanwhile, it also unexpectedly further improves the mechanical strength, hardness and wear resistance of the board.

Preferably, the traction roller assembly at least comprises an input traction roller pair configured to traction the semi-finished board along an inclined direction of the outlet, and an output traction roller pair configured to convey the semi-finished board along a horizontal direction.

The traction roller assembly in the present application comprises a plurality of traction roller pairs; therefore, during traction, the semi-finished board can be subjected to multiple extrusions and shapings, thereby microscopically regulating the crystallization state inside the semi-finished board, ensuring that the crystal size structure inside the semi-finished board remains in a substantially consistent state, and preventing warpage and other problems caused by differences in crystallization conditions of various portions.

Preferably, an included angle between a perpendicular line of a center connecting line of two traction rollers in the input traction roller pair and the horizontal plane is greater than the included angle between the outlet and the horizontal plane.

Through the above limitation, the traction rollers of the input traction roller pair are closer to being perpendicular to the horizontal plane, thereby enabling a greater traction force to be applied. This helps to more effectively traction the semi-finished board and provide stronger tensile force, making the board more stable during conveying. Meanwhile, the inclined input traction roller pair can traction the semi-finished board in an inclined manner along the direction of the outlet. This traction mode can improve transmission of the board, enabling it to pass through the device more smoothly and reducing possible jamming or blockage. Moreover, since the traction force applied by the input traction roller pair is relatively large, it can effectively resist gravity acting on the semi-finished board, thereby reducing deformation risk during conveying and maintaining shape stability. Finally, the inclined input traction roller pair can better control the movement trajectory and speed of the semi-finished board, improving operating efficiency of the production line and ensuring that the semi-finished board is conveyed and processed as expected.

Preferably, the center connecting line of the input traction roller pair intersects with and is not perpendicular to the center connecting line of the output traction roller pair.

By arranging the center connecting line of the input traction roller pair to intersect with and not be perpendicular to the center connecting line of the output traction roller pair, the following benefits can be achieved: (1) intersecting and non-perpendicular center connecting lines can guide the semi-finished board to change direction during traction, improving the transmission path and reducing possible jamming or blockage; (2) intersecting center connecting lines can help uniformly apply traction force so that it is evenly distributed over the entire surface of the board, reducing deformation risk and ensuring stable conveying; (3) since the center connecting lines intersect and are not perpendicular, the input traction roller pair and the output traction roller pair can better cooperate to provide stronger tensile force and traction force, thereby improving traction effect and control of the semi-finished board; (4) the intersecting and non-perpendicular design provides more operational flexibility, allowing operators to adjust the included angle between the input traction roller pair and the output traction roller pair according to requirements of different boards.

Preferably, the input traction roller pair comprises a pair of traction rollers distributed in a vertical direction; wherein the height of the outlet of the die is greater than the height of the traction roller located below in the input traction roller pair.

By setting the height of the outlet to be greater than the height of the traction roller located below in the input traction roller pair, it can be ensured that the semi-finished board can smoothly pass through the traction rollers, avoiding jamming or obstruction during transmission, ensuring smooth conveying, reducing the possibility of jamming or production stoppage, thereby improving capacity and efficiency of the production line, and avoiding damage or deformation of the semi-finished board during transmission, reducing maintenance and replacement frequency of the traction rollers, lowering maintenance costs and prolonging service life. At the same time, excessive compression and deformation of the semi-finished board when passing through the traction rollers can be avoided, helping maintain shape and structural integrity and reducing potential damage risk.

Preferably, the semi-finished board output from the outlet is tractioned and conveyed along a tangential direction of the input traction roller pair.

Tractioning and conveying the semi-finished board along the tangential direction of the input traction roller pair can achieve stable movement, reduce shaking and bumping during conveying, ensure stable transmission, enable higher speed and more stable passage through the device, improve capacity and efficiency, better control position and alignment of the board, improve processing and positioning accuracy, ensure final product quality and dimensional compliance, uniformly apply traction force, reduce bending and deformation risk, avoid local deformation, and maintain flatness and shape stability.

Preferably, the included angle between the outlet and the horizontal plane is 30-60°.

Preferably, the temperature of the traction roller assembly is lower than the temperature of the outlet; and the temperatures of the traction rollers in the traction roller assembly gradually increase along a conveying direction of the semi-finished board.

By setting a temperature gradient, the crystallization behavior of the polymer during conveying of the semi-finished board can be controlled. During output of the melt along the outlet of the die, since the surface temperature of the semi-finished board rapidly decreases while the middle portion remains at a relatively high temperature, a relatively large temperature difference exists between the interior and exterior, causing significant differences in crystallinity. Specifically, polymer crystals on the surface have smaller particle sizes, while polymer crystals inside are relatively larger. Meanwhile, due to the sudden temperature drop at the surface, part of the polymer chain segments may be fixed by cooling before crystallization, resulting in differences in crystallinity between interior and exterior and further affecting stability.

In response, by setting the temperature of the traction roller assembly to influence the crystallization process, the Applicant found that gradually increasing temperatures of the traction rollers can increase crystallization degrees of both interior and exterior, improve crystallinity, achieve precise control of crystallization, ensure uniform crystallization during conveying, improve product quality and consistency, reduce material non-uniformity, improve strength and rigidity, and be more suitable for specific application requirements. In addition, gradually increasing temperatures can perform an annealing step on the semi-finished board, reducing residual stress. The principle is that temperature change promotes rearrangement of polymer molecules, reduces residual stress, and improves stability and durability.

In summary, setting the temperature of the traction roller assembly lower than the temperature of the outlet, and gradually increasing the temperatures of the traction rollers along the conveying direction, can improve strength, reduce residual stress, and improve quality and consistency by controlling crystallization behavior.

Preferably, a temperature difference between the traction roller used for inputting the semi-finished board and the outlet is 10-15°C; and a temperature difference between the traction roller used for outputting the semi-finished board and the outlet is ≤10°C.

The temperatures of the traction rollers are relatively close to the temperature of the semi-finished board output from the outlet, effectively avoiding non-uniform crystallization caused by rapid cooling and further improving stability and reducing warpage rate.

Preferably, each traction roller comprises a traction roller body and a first temperature-control jacket covering an outer portion thereof; the first temperature-control jacket is filled with a temperature-control liquid capable of controlling a surface temperature of the first temperature-control jacket.

By designing the traction roller to comprise a traction roller body and an outer first temperature-control jacket filled with temperature-control liquid, precise control and optimization of traction roller temperature can be achieved in terms of temperature control, temperature uniformity, heat regulation and prevention of adhesion.

Preferably, a temperature-control device configured to control the temperature of the semi-finished board output from the outlet is arranged outside the die at the outlet.

Preferably, the temperature-control device comprises a second temperature-control jacket filled with a temperature-control liquid.

Preferably, the deformation control device further comprises a support seat configured to support the traction roller assembly; the support seat is further provided with a driving device configured to drive the traction rollers in the traction roller assembly to move.

The support seat provides necessary support and stability for the traction roller assembly, bears the overall weight, and ensures balance and stability during operation. Through the driving device, movement of the traction rollers can be precisely controlled, achieving precise traction and positioning of the semi-finished board and ensuring dimensional and shape accuracy of the product.

Preferably, a shaping template configured to shape the semi-finished board is further arranged on the support seat behind the traction roller assembly.

The shaping template provides precise shaping dimensions. By contacting the semi-finished board with the shaping template and applying appropriate pressure and heat source, the semi-finished board can be formed according to design requirements, improving shaping precision, reducing deviation caused by inconsistent manual operation, improving consistency and stability, and enhancing production efficiency.

Preferably, the deformation control device further comprises a die hanger configured to hoist and fix the die.

The die hanger provides a safe and reliable method for hoisting and fixing the die, ensuring stability during hoisting and transportation, avoiding accidental shaking or falling, protecting equipment and operators, simplifying hoisting and fixing, and improving efficiency and accuracy.

In a second aspect, the present invention further provides an extrusion production line for a non-polyvinyl chloride wood-plastic board, comprising the deformation control device according to any one of the above.

Preferably, the extrusion production line sequentially comprises, along a material conveying direction, an extruder, the deformation control device, a cooling mechanism, a traction mechanism and a cutting mechanism.

The extruder is the starting part, configured to heat, melt and extrude non-polyvinyl chloride wood-plastic composite material into a board shape. The deformation control device is located after the extruder to control deformation and reduce warpage after extrusion. The cooling mechanism rapidly cools and solidifies the board to maintain required shape and dimensions. The traction mechanism, located after the cooling mechanism, traction and stretches the cooled board to increase strength and stability. The cutting mechanism, located after the traction mechanism, cuts the cooled and tractioned board to required lengths to obtain final products.

Through the above configuration, extrusion production of non-polyvinyl chloride wood-plastic boards can be achieved, wherein the deformation control device controls deformation of the extruded board to obtain required shape and dimensions.

Preferably, the cooling mechanism comprises a plurality of groups of powered cooling rollers and a plurality of groups of driven cooling rollers.

A cooling mechanism using powered cooling rollers and driven cooling rollers can improve efficiency, accelerate cooling, shorten production cycle, ensure uniform cooling and shape control, reduce defective rate caused by uneven temperature or deformation, and improve quality and capacity.

Preferably, the cooling mechanism further comprises a cooling bracket arranged behind the powered cooling rollers and the driven cooling rollers.

Preferably, bottoms of the deformation control device and the cooling mechanism are provided with slide rails extending along an extension direction of the extruder; bottoms thereof are further provided with pulleys capable of driving the deformation control device and the cooling mechanism to move along the slide rails to control a distance from the die.

Through slide rails and pulleys, flexible adjustment can be achieved. Operators can adjust positions to control distance from the die to adapt to different die sizes and shapes, finely adjust gaps to achieve required deformation and cooling effects, facilitate cleaning, maintenance or replacement, reduce downtime, improve stability and reliability, shorten die change and adjustment time, and improve efficiency and capacity.

In a third aspect, the present invention further provides an application of the deformation control device for a non-polyvinyl chloride wood-plastic board as described above, or the extrusion production line comprising the deformation control device, in preparation of a non-polyvinyl chloride wood-plastic board or a non-polyvinyl chloride floor.

The present invention has the following beneficial effects:
- The deformation control device changes the angular relationship between the outlet of the die and the horizontal plane, thereby changing the included angle between the traction direction and gravity direction, effectively overcoming shrinkage and warpage problems;
- Meanwhile, the above arrangement unexpectedly further improves mechanical strength, hardness and wear resistance;
- By adding the deformation control device into the extrusion production line, unqualified flooring caused by board warpage is avoided.

### Description of Drawings

FIG. 1 is a schematic structural diagram of the non-polyvinyl chloride wood-plastic board extrusion production line according to the present invention.
FIG. 2 is an enlarged view of portion a in FIG. 1 of the present invention.
FIG. 3 is a schematic structural diagram of the hoisting structure of the die according to the present invention.
FIG. 4 is a schematic structural diagram of the traction roller assembly according to the present invention.
FIG. 5 is a schematic cross-sectional structural diagram of the traction roller according to the present invention.
FIG. 6 is a schematic cross-sectional structural diagram of the die according to the present invention.
FIG. 7 is a schematic structural diagram of the mold temperature machine in the cooling mechanism according to the present invention.

In the figures: extruder 100, barrel 101, feeding mechanism 102, semi-finished board 200, die 300, outlet 301, temperature control device 302, second temperature control jacket 303, die hanger 304, traction roller assembly 400, traction roller 401, No. 1 traction roller 401-1, No. 2 traction roller 401-2, No. 3 traction roller 401-3, input traction roller pair 402, output traction roller pair 403, traction roller body 404, first temperature control jacket 405, support base 406, driving device 407, shaping template 408, cooling mechanism 500, mold temperature machine 501, powered cooling roller 502, driven cooling roller 503, cooling bracket 504, slide rail 505, pulley 506, traction mechanism 600, cutting mechanism 700.

### Detailed Description

The present invention will be further described below in conjunction with specific embodiments. Those of ordinary skill in the art can implement the present invention based on these descriptions. In addition, the embodiments of the present invention described below are merely some embodiments of the present invention rather than all embodiments. All other embodiments obtained by those of ordinary skill in the art based on the embodiments of the present invention without creative efforts shall fall within the scope of protection of the present invention.

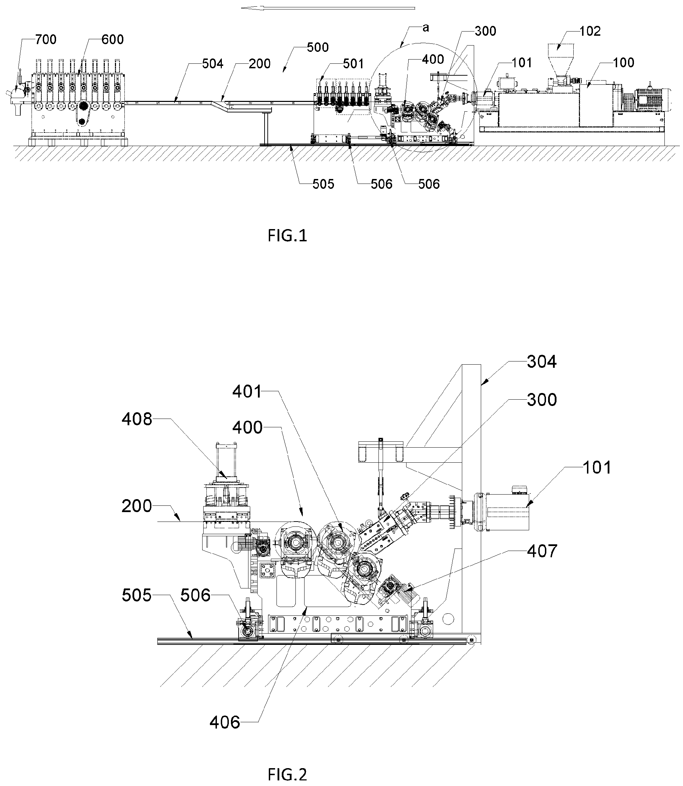

As shown in FIG. 1, Embodiment 1 provides a non-polyvinyl chloride wood-plastic board extrusion production line. In the material conveying direction (i.e., from left to right in FIG. 1), the extrusion production line sequentially comprises an extruder 100 for melting and plasticizing a non-polyvinyl chloride material and extruding the plasticized melt, a die 300 for outputting the plasticized melt to form a semi-finished board 200, a traction roller assembly 400 for traction of the semi-finished board 200 and controlling its deformation rate, a cooling mechanism 500 for cooling and shaping the semi-finished board 200 after deformation control, a traction mechanism 600 for traction of the semi-finished board 200, and a cutting mechanism 700 for cutting the semi-finished board 200 to obtain a finished non-polyvinyl chloride wood-plastic board.

The extruder 100 may be a single-screw extruder or a twin-screw extruder, and includes a barrel 101 and a feeding mechanism 102 for feeding material into the barrel 101. Taking the production of a polypropylene wood-plastic board as an example, polypropylene wood-plastic board raw materials are first added into the feeding mechanism 102. These polypropylene wood-plastic board raw materials are heated by the barrel 101 and plasticized by the internal screw, thereby being melted to form a melt. Generally, the polypropylene wood-plastic board raw materials include polypropylene resin and wood powder, and in some cases further include a certain amount of plasticizer and lubricant. After mixing these raw materials and crushing them through extrusion granulation equipment or a mixer, the desired polypropylene wood-plastic board raw materials can be obtained.

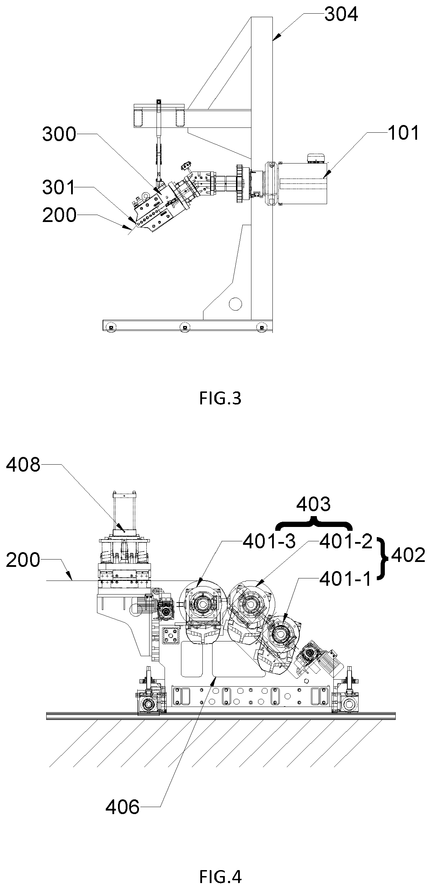

As shown in FIGS. 2 and 3, the die 300 is connected to the end of the barrel 101 and includes an outlet 301. The melt flowing out of the barrel 101 is extruded and shaped through the outlet 301 to obtain the semi-finished board 200. Unlike board substrates using polyvinyl chloride as a raw material in the prior art, such as SPC substrates and LVT substrates, the die 300 of the present application forms a certain included angle with the horizontal plane, such that the semi-finished board 200 output from the die 300 is discharged in a non-horizontal direction, thereby reducing the increase in warpage of the semi-finished board 200 caused by gravity.

Due to the relatively large weight of the die 300, in some preferred embodiments, in order to improve the connection stability between the die 300 and the barrel 101, a die hanger 304 for hoisting and fixing the die 300 is additionally provided, thereby providing a safe and reliable hoisting and fixing method for the die 300. It can ensure the stability of the die 300 during hoisting and transportation, prevent accidental shaking or falling, and protect the safety of equipment and operators. Meanwhile, it can simplify the hoisting and fixing process of the die 300, and improve hoisting efficiency and accuracy.

As shown in FIGS. 2 and 4, matched with the die 300, a traction roller assembly 400 for traction and shaping of the semi-finished board 200 is arranged behind the die 300. The traction roller assembly 400 is composed of a plurality of traction rollers 401. As shown in FIG. 2, in this embodiment the number of traction rollers 401 is three. Along the conveying direction of the semi-finished board, the three traction rollers 401 are respectively defined as No. 1 traction roller 401-1, No. 2 traction roller 401-2, and No. 3 traction roller 401-3. According to the positions and functions of the traction rollers 401, the traction rollers 401 in the traction roller assembly 400 may at least be divided into an input traction roller pair 402 composed of the No. 1 traction roller 401-1 and the No. 2 traction roller 401-2 for traction of the semi-finished board 200 along the inclined direction of the outlet 301, and an output traction roller pair 403 composed of the No. 2 traction roller 401-2 and the No. 3 traction roller 401-3 for changing the conveying direction of the semi-finished board 200 so that it is conveyed along a horizontal direction.

In some preferred embodiments, the center connecting line of the No. 1 traction roller 401-1 and the No. 2 traction roller 401-2 in the input traction roller pair 402 intersects with and is not perpendicular to the center connecting line of the No. 2 traction roller 401-2 and the No. 3 traction roller 401-3 in the output traction roller pair 403, such that the No. 2 traction roller 401-2 and the No. 3 traction roller 401-3 are distributed horizontally, and the No. 1 traction roller 401-1 and the No. 2 traction roller 401-2 are distributed obliquely in a vertical direction. The No. 1 traction roller 401-1 is closer to the outlet 301 of the die 300 than the No. 2 traction roller 401-2. In addition, the height of the outlet 301 of the die 300 is greater than the height of the No. 1 traction roller 401-1 and less than the height of the No. 2 traction roller 401-2, such that the semi-finished board 200 output from the outlet 301 is conveyed in a direction tangent to both the No. 1 traction roller 401-1 and the No. 2 traction roller 401-2.

In some preferred embodiments, an included angle between a perpendicular line of the center connecting line of the No. 1 traction roller 401-1 and the No. 2 traction roller 401-2 in the input traction roller pair 402 and the horizontal plane is greater than an included angle between the outlet 301 and the horizontal plane. Such arrangement can further reduce the warpage degree of the prepared semi-finished board 200.

In order to explore the relationship between the included angle between the outlet 301 and the horizontal plane and the warpage degree of the finally obtained semi-finished board 200, in this embodiment, semi-finished boards 200 prepared under different outlet 301 angles and corresponding traction roller assemblies 400 were tested. The test results are shown in Table 1 below.

**Table 1**

| Item | Group 1 | Group 2 | Group 3 | Group 4 | Group 5 | Group 6 | Group 7 | Group 8 |
|---|---|---|---|---|---|---|---|---|
| Included angle between outlet and horizontal plane | 0° | 10° | 20° | 30° | 45° | 60° | 80° | 90° |
| Warpage (mm/m) | 0.62 | 0.59 | 0.43 | 0.28 | 0.16 | 0.19 | 0.26 | 0.25 |
| Other conditions | Uniform thickness | Uniform thickness | Uniform thickness | Uniform thickness | Uniform thickness | Uniform thickness | Occasional flow marks | Obvious flow marks |
| Extrusion conditions | Outlet temperature: 150°C; No. 1 traction roller: 138°C; No. 2 traction roller: 138°C; No. 3 traction roller: 145°C | | | | | | | |
| Test method | GB/T 15036.2-2009 | | | | | | | |

.

From the above test results, it can be seen that with the change of the angle of the outlet 301, the influence of gravity on the warpage degree of the semi-finished board 200 can be effectively reduced. When the outlet 301 is flush with the horizontal plane (i.e., the included angle is 0°), the warpage degree of the semi-finished board reaches a maximum of 0.62 mm/m. As the included angle between the outlet 301 and the horizontal plane increases, the warpage degree gradually decreases. When the included angle between the outlet 301 and the horizontal plane is ≥30°, the warpage degree of the semi-finished board 200 can be reduced to less than 0.3 mm/m. However, the included angle between the outlet and the horizontal plane is not necessarily the larger the better. When the included angle between the outlet 301 and the horizontal plane is 80°, flow marks appear on the surface of the semi-finished board 200. When the outlet 301 is perpendicular to the horizontal plane (i.e., the included angle is 90°), obvious flow marks are present. Therefore, considering both the warpage degree and flow mark condition of the semi-finished board 200, when the included angle between the outlet 301 and the horizontal plane is 30-60°, the prepared semi-finished board 200 exhibits optimal performance.

In addition to the regulation of warpage of the semi-finished board 200 by the included angle between the outlet 301 and the horizontal plane, the applicant further found that the temperature of each traction roller 401 in the traction roller assembly also plays an auxiliary role in deformation control of the semi-finished board 200. After the semi-finished board 200 is output along the outlet 301, the surface temperature thereof rapidly decreases, while the interior remains at a relatively high temperature. Due to the large temperature difference between the interior and exterior of the semi-finished board 200, the crystallization properties inside and outside the semi-finished board 200 change significantly. Specifically, polymer crystals on the surface of the semi-finished board 200 have smaller particle sizes, while polymer crystals inside the semi-finished board 200 are relatively larger. In addition, due to the sudden temperature drop at the surface, some polymer chain segments are fixed by cooling before crystallization is completed, resulting in differences in crystallinity between the interior and exterior of the semi-finished board 200, thereby further affecting its stability.

In this embodiment, in view of the above problems, by setting the temperature of the traction roller assembly 400, the crystallization process of the polymer is changed, thereby reducing warpage and deformation of the semi-finished board 200 after extrusion. Specifically, the overall temperature of the traction roller assembly 400 is lower than the temperature of the outlet 301, thereby promoting crystallization of the polymer inside the semi-finished board 200. Meanwhile, the temperatures of the traction rollers 401 in the traction roller assembly 400 are sequentially increased along the conveying direction of the semi-finished board 200. Through the gradually increasing temperature of the traction roller assembly 400, the crystallization degree inside and outside the semi-finished board 200 can be increased, and precise control of the polymer crystallization process can be achieved, ensuring uniform crystallization during conveying, thereby improving product quality and consistency and reducing material non-uniformity. This helps improve the strength and rigidity of the semi-finished board 200, making it more suitable for specific application requirements. In addition, by gradually increasing the temperature of the traction rollers 401 in the traction roller assembly 400, an annealing step can be performed on the semi-finished board 200, thereby reducing residual stress therein. The principle lies in that temperature variation promotes rearrangement of polymer molecules, reduces residual stress in the board, and improves stability and durability.

Under some preferred conditions of this embodiment, the temperature difference between the traction roller 401 for inputting the semi-finished board 200 in the traction roller assembly 400 and the temperature of the outlet 301 may be set to 10-15°C, and the temperature difference between the traction roller 401 for outputting the semi-finished board 200 in the traction roller assembly 400 and the temperature of the outlet 301 may be ≤10°C. Such arrangement enables the temperature of the traction rollers 401 in the traction roller assembly 400 to be relatively close to the temperature of the semi-finished board 200 output from the outlet 301, effectively avoiding uneven crystallization caused by rapid cooling of the semi-finished board 200, thereby further improving the stability of the semi-finished board 200 and reducing its warpage rate.

In order to explore the relationship between the temperature of the traction roller assembly 400 and the warpage degree of the finally obtained semi-finished board 200, in this embodiment, semi-finished boards 200 prepared under different traction roller assembly 400 temperatures were tested. The test results are shown in Table 2 below.

**Table 2**

| **Item** | | **Group 1** | **Group 2** | **Group 3** |
|---|---|---|---|---|
| Included angle between outlet and horizontal plane | | 45° | 45° | 45° |
| Outlet temperature | | 150°C | 150°C | 150°C |
| Traction roller assembly temperature (°C) | No. 1 traction roller | 138°C | 145°C | 120°C |
| | No. 2 traction roller | 138°C | 140°C | 125°C |
| | No. 3 traction roller | 145°C | 135°C | 130°C |
| Warpage (mm/m) | | 0.16 | 0.28 | 0.39 |

From the above test results, it can be seen that with changes in the temperature of each traction roller 401 in the traction roller assembly 400, the warpage degree of the finally obtained semi-finished board 200 correspondingly changes.

In order to precisely control the temperature of the traction rollers 401 in the traction roller assembly 400 and the outlet 300, the present application specifically designs the traction rollers 401 and the die 300.

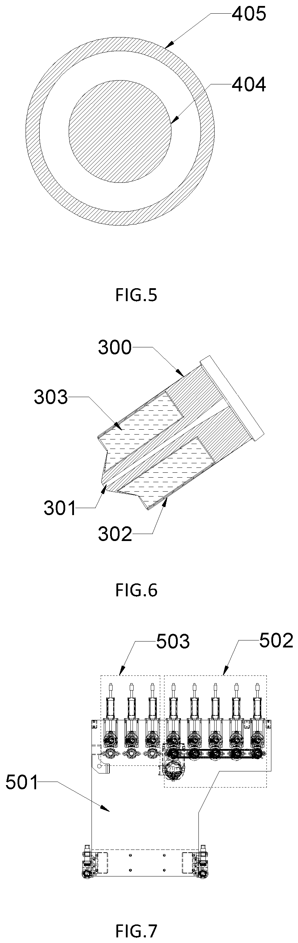

In some preferred embodiments, as shown in FIG. 5, the traction roller 401 includes a traction roller body 404 and a first temperature control jacket 405 wrapped around the outside of the traction roller body 404. A temperature control liquid capable of controlling the surface temperature of the first temperature control jacket 405 is filled in a region between the first temperature control jacket 405 and the traction roller body 404.

As shown in FIG. 6, a temperature control device 302 for controlling the temperature of the semi-finished board 200 output from the outlet 301 is arranged on the outer side of the outlet 301 of the die 300. The temperature control device 302 includes a second temperature control jacket 303, and a temperature control liquid is filled inside the second temperature control jacket 303.

As further shown in FIGS. 1 and 2, in order to improve the support and stability required for the traction roller assembly 400, a support base 406 for carrying the traction roller assembly 400 is further provided. The support base 406 is further provided with a driving device 407 for driving the traction rollers 401 in the traction roller assembly 400 to rotate. The driving device 407 may be a motor or other device for providing rotational power to the traction rollers 401. Each traction roller 401 may be provided with a corresponding driving device 407, or multiple traction rollers 401 may correspond to one driving device 407, and linkage of multiple traction rollers 401 may be achieved through a transmission device (such as a transmission belt or transmission chain).

In addition, in order to further improve the stability of the semi-finished board 200, a shaping template 408 for shaping the semi-finished board 200 is further arranged on the support base 406 behind the traction roller assembly 400. The shaping template 408 contacts the semi-finished board 200 and can apply certain pressure and a heat source, thereby applying a thermal pressing effect to the semi-finished board, ensuring that the semi-finished board forms a desired shape and size according to design requirements during shaping, and improving shaping accuracy.

The cooling mechanism 500 includes a roller-type mold temperature machine 501, the schematic structure of which is shown in FIG. 7. The mold temperature machine 501 includes several groups of powered cooling rollers 502 and several groups of driven cooling rollers 503. After the semi-finished board 200 exits from the shaping template 408, it is conveyed forward sequentially along the powered cooling rollers 502 and the driven cooling rollers 503, thereby rapidly cooling and shaping through contact between the powered cooling rollers 502, the driven cooling rollers 503 and the semi-finished board 200.

As shown in FIG. 1, after the semi-finished board 200 exits from the mold temperature machine 501, it enters a cooling bracket 504. As the semi-finished board 200 moves on the cooling bracket 504, it contacts air, thereby cooling and reducing temperature.

In some preferred embodiments, in order to facilitate adjustment of the distance between the traction roller assembly 400, the cooling mechanism 500 and the die 300, slide rails 505 extending along the extension direction of the extruder 100 are arranged at the bottoms of the traction roller assembly 400 and the cooling mechanism 500. Correspondingly, pulleys 506 capable of driving the traction roller assembly 400 and the cooling mechanism 500 to move along the slide rails 505 to control the distance from the die are further arranged at the bottoms of the traction roller assembly 400 and the cooling mechanism 500. Thus, operators can control the distance between the traction roller assembly 400, the cooling mechanism 500 and the die 300 by adjusting the position of the pulleys 506 on the slide rails 505 to accommodate dies 300 of different sizes and shapes. Meanwhile, by adjusting the position of the pulleys 506, the gap between the traction roller assembly 400, the cooling mechanism 500 and the die can be finely adjusted to achieve desired deformation and cooling effects.

In order to reliably traction the semi-finished board 200, a traction mechanism 600 driven by a motor or other driving mechanism is arranged behind the cooling bracket 504, so as to feed the semi-finished board 200 into the cutting mechanism 700 located behind the traction mechanism 600, thereby cutting the semi-finished board 200 to finally obtain a finished non-polyvinyl chloride wood-plastic board.

In the present application, by changing the angular relationship between the outlet 301 of the die 300 and the horizontal plane, the included angle between the direction in which the semi-finished board 200 is tractioned by the traction roller assembly 400 along the outlet 301 and the direction of gravity acting on the semi-finished board 200 itself is changed, thereby effectively overcoming shrinkage and warpage problems that did not occur in traditional board substrates using polyvinyl chloride as a raw material during extrusion. At the same time, the mechanical strength, hardness and wear resistance of the board are unexpectedly further improved. In addition, by adding the non-polyvinyl chloride wood-plastic board deformation control device into the non-polyvinyl chloride wood-plastic board extrusion production line, an increase in defective flooring caused by board warpage is avoided.

The specific embodiments described herein are merely illustrative of the spirit of the present invention. Those skilled in the art may make various modifications, supplements or substitutions to the described embodiments without departing from the spirit of the present invention or exceeding the scope defined by the appended claims.

## Claims

1. A non-polyvinyl chloride wood-plastic board deformation control device, **characterized in that** it comprises:
a die fixedly connected with an extruder and configured to output a semi-finished board; and
a traction roller assembly formed by a plurality of traction rollers and configured to traction and shape the semi-finished board;
wherein the die comprises an outlet for outputting the semi-finished board, and an included angle is formed between the outlet and a horizontal plane, such that a direction in which the semi-finished board is tractioned by the traction roller assembly along the outlet does not coincide with a direction of gravity acting on the semi-finished board itself, and an included angle between the two directions is less than 90°.

2. The non-polyvinyl chloride wood-plastic board deformation control device according to claim 1, wherein
the traction roller assembly at least comprises an input traction roller pair configured to traction the semi-finished board along an inclined direction of the outlet, and an output traction roller pair configured to convey the semi-finished board in a horizontal direction.

3. The non-polyvinyl chloride wood-plastic board deformation control device according to claim 2, wherein
an included angle between a perpendicular line of a center connecting line of two traction rollers in the input traction roller pair and the horizontal plane is greater than the included angle between the outlet and the horizontal plane.

4. The non-polyvinyl chloride wood-plastic board deformation control device according to claim 2, wherein
a center connecting line of the input traction roller pair intersects with and is not perpendicular to a center connecting line of the output traction roller pair.

5. The non-polyvinyl chloride wood-plastic board deformation control device according to claim 2, 3 or 4, wherein
the input traction roller pair comprises a pair of traction rollers distributed in a vertical direction; and
a height of the outlet of the die is greater than a height of a lower traction roller in the input traction roller pair.

6. The non-polyvinyl chloride wood-plastic board deformation control device according to any one of claims 1-4, wherein
the semi-finished board output from the outlet is tractioned and conveyed along a tangential direction of the input traction roller pair.

7. The non-polyvinyl chloride wood-plastic board deformation control device according to claim 1, wherein
the included angle between the outlet and the horizontal plane is 30-60°.

8. The non-polyvinyl chloride wood-plastic board deformation control device according to claim 1, wherein
a temperature of the traction roller assembly is lower than a temperature of the outlet; and
temperatures of the traction rollers in the traction roller assembly sequentially increase along a conveying direction of the semi-finished board.

9. The non-polyvinyl chloride wood-plastic board deformation control device according to claim 8, wherein
a temperature difference between a traction roller for inputting the semi-finished board in the traction roller assembly and the temperature of the outlet is 10-15°C; and
a temperature difference between a traction roller for outputting the semi-finished board in the traction roller assembly and the temperature of the outlet is ≤10°C.

10. The non-polyvinyl chloride wood-plastic board deformation control device according to claim 1, 8 or 9, wherein
each traction roller comprises a traction roller body and a first temperature control jacket wrapped around the outside of the traction roller body;
and a temperature control liquid capable of controlling a surface temperature of the first temperature control jacket is filled inside the first temperature control jacket.

11. The non-polyvinyl chloride wood-plastic board deformation control device according to claim 1, 8 or 9, wherein
a temperature control device configured to control a temperature of the semi-finished board output from the outlet is arranged on an outer side of the die at the outlet.

12. The non-polyvinyl chloride wood-plastic board deformation control device according to claim 11, wherein
the temperature control device comprises a second temperature control jacket filled with a temperature control liquid.

13. The non-polyvinyl chloride wood-plastic board deformation control device according to claim 1, wherein
the deformation control device further comprises a support base configured to carry the traction roller assembly;
and a driving device configured to drive the traction rollers in the traction roller assembly is arranged on the support base.

14. The non-polyvinyl chloride wood-plastic board deformation control device according to claim 13, wherein
a shaping template configured to shape the semi-finished board is further arranged on the support base behind the traction roller assembly.

15. The non-polyvinyl chloride wood-plastic board deformation control device according to claim 1 or 13, wherein
the deformation control device further comprises a die hanger configured to hoist and fix the die.

16. A non-polyvinyl chloride wood-plastic board extrusion production line, **characterized in that** it comprises the non-polyvinyl chloride wood-plastic board deformation control device according to any one of claims 1-15.

17. The non-polyvinyl chloride wood-plastic board extrusion production line according to claim 16, wherein
an extruder, the deformation control device, a cooling mechanism, a traction mechanism, and a cutting mechanism are sequentially arranged along a material conveying direction.

18. The non-polyvinyl chloride wood-plastic board extrusion production line according to claim 17, wherein
the cooling mechanism comprises several groups of powered cooling rollers and several groups of driven cooling rollers.

19. The non-polyvinyl chloride wood-plastic board extrusion production line according to claim 18, wherein
the cooling mechanism further comprises a cooling bracket arranged behind the powered cooling rollers and the driven cooling rollers.

20. The non-polyvinyl chloride wood-plastic board extrusion production line according to claim 17, 18 or 19, wherein
bottoms of the deformation control device and the cooling mechanism are provided with slide rails extending along an extension direction of the extruder;
and bottoms of the deformation control device and the cooling mechanism are further provided with pulleys configured to drive the deformation control device and the cooling mechanism to move along the slide rails so as to control a distance between the deformation control device, the cooling mechanism and the die.

21. Use of the non-polyvinyl chloride wood-plastic board deformation control device according to any one of claims 1-15, or the non-polyvinyl chloride wood-plastic board extrusion production line comprising the deformation control device according to any one of claims 16-20, in preparing a non-polyvinyl chloride wood-plastic board or a non-polyvinyl chloride flooring.
